Europäisches Patentamt

European Patent Office

Office européen des brevets

(11) Veröffentlichungsnummer: **0 044 917**
**B1**

(12) **EUROPÄISCHE PATENTSCHRIFT**

(45) Veröffentlichungstag der Patentschrift: **10.09.86**

(21) Anmeldenummer: **81104037.7**

(22) Anmeldetag: **26.05.81**

(51) Int. Cl.⁴: **C 09 J 3/16, C 08 L 75/06, H 05 K 3/38**

(54) **Haftvermittler für ein Trägermaterial.**

(30) Priorität: **26.07.80 DE 3028496**

(43) Veröffentlichungstag der Anmeldung:
**03.02.82 Patentblatt 82/05**

(45) Bekanntmachung des Hinweises auf die
Patenterteilung:
**10.09.86 Patentblatt 86/37**

(84) Benannte Vertragsstaaten:
**FR GB**

(56) Entgegenhaltungen:
**FR-A-2 234 360**
**GB-A-1 400 756**

(73) Patentinhaber: **PREH, Elektrofeinmechanische Werke Jakob Preh Nachf. GmbH & Co.**
**Postfach 1740 Schweinfurter Strasse 5**
**D-8740 Bad Neustadt/Saale (DE)**

(72) Erfinder: **Ambros, Peter, Dipl.-Chem.**
**Jahnstrasse 6**
**D-8741 Hohenroth (DE)**
Erfinder: **Gatzke, Erich, Ing. grad.**
**Sonnenlandstrasse 8**
**D-8740 Bad Neustadt / Saale (DE)**

Courier Press, Leamington Spa, England.

EP 0 044 917 B1

**Beschreibung**

Die Erfindung geht von einem Haftvermittler für ein Trägermaterial nach dem Oberbegriff des Anspruches 1 aus.

Das Problem der Haftung tritt insbesondere bei der Herstellung von Leiterbahnen bei gedruckten Schaltungen auf. In der Praxis gibt es bereits eine Vielzahl von Verfahren zur Herstellung dieser gedruckten Schaltungen. Neben dem Subtraktiv-Verfahren ist auch das Additiv- bzw. Semiadditiv-Verfahren verbreitet. Bei allen bereits bekannt gewordenen Verfahren des Additif-Aufbaus wird auch dann, wenn sich diese durch verschiedene Verfahrensschritte unterscheiden, ein Haftvermittler benötigt, der die Haftung zwischen dem Trägermaterial oder Substrat und der additiv aufgebauten Metallschicht, meist aus Kupfer, sicherstellen soll. Dies gilt insbesondere dann, wenn die Leiterbahnen wie üblich lötbar sein sollen. Der Haftvermittler selbst ist ein wärmehärtbarer Kleber, im allgemeinen auf der Basis eines Acrylnitril-Butadien-Copolymerisates, d.h. eines Nitril-Kautschuks, der mit einem hitzereaktiven Phenolkörper gehärtet wird. Zur Erzielung einer genügend großen Haftfestigkeit gegenüber der Kupferbeschichtung auf dem Substrat wird der Haftvermittler oftmals einer chemischen Beizbehandlung unterzogen. Anschließend wird z.B. das Trägermaterial in üblicher Weise aktiviert und darauffolgend chemisch verkupfert. Danach wird in bekannter Weise ein Negativbild in Sieb- oder Photodruck hergestellt. Durch anschließende galvanische Verkupferung kann die gewünschte Leiterbahnstärke erreicht werden. Zur Erzielung einer noch besseren Haftfestigkeit ist es oftmals erforderlich, das mit dem Haftvermittler beschichtete Trägermaterial auch mechanisch aufzurauhen.

So ist bereits ein Verfahren zur Herstellung einer gedruckten Schaltung bekannt (DE—OS 1 640 635), bei der das Substrat mit einer Haftvermittlerschicht versehen wird. Diese besteht aus einer Mischung eines aushärtbaren Harzes, wie z.B. Epoxid- oder Phenolharzes mit einem feinkörnigen Zuschlagstoff, wie z.B. Silikate oder Metalloxide. Die Haftvermittlerschicht wird mindestens teilweise oder auch vollständig ausgehärtet, wobei die Haftung an der Substratoberfläche sichergestellt wird. Vor dem Aufbringen der leitfähigen Metallschicht wird die Haftvermittlerschicht einer chemischen Aufschließung unterworfen. Zuvor kann die Haftvermittlerschicht durch mechanische Aufrauhung behandelt werden. Hierbei werden die Teilchen des Zuschlagstoffes angeschliffen und beim darauffolgenden Aufschließen herausgelöst, ohne daß der Harzanteil angegriffen wird. Es entsteht so eine mit Löchern und Hinterschneidungen versehene Oberfläche. Auf diese Oberfläche wird auf galvanischem Wege die leitfähige Metallschicht aufgebracht. Die chemische Aufschließung erfolgt mit Hilfe von Natronlauge, schwachen Säuren oder organischen Lösungsmitteln. Dieser Verfahrensschritt beinhaltet einen Verlust an für die Aufschließung benötigten Ätzmittel, ganz abgesehen von den Abwasserproblemen. Darüberhinaus sind eine genaue Badführung mit laufenden Kontrollen und häufige Baderneuerungen erforderlich.

Es ist ein weiteres Verfahren in Additivtechnik zur Herstellung einer gedruckten Schaltung bekannt (DE—OS 20 44 484), bei der sich zwischen Kupferschicht und Substrat ein Haftvermittler befindet. Dieser setzt sich aus Acrylnitril-Butadien und Phenolharz zusammen, die in Methyläthylketon gelöst sind. Nach einer Trocknungszeit von 2,5 Stunden bei 140°C weist der Haftvermittler einen Oberflächenwiderstand von $10^5$ bis $10^8$ MOhm auf. Vor der Verkupferung wird der Haftvermittler durch eine Mischung aus Schwefelsäure, Wasser und Chromsäure angeätzt. Bei dieser Aktivierung wird die Butadien-Komponente oxydativ schneller angegriffen als die beiden anderen Komponenten. Dadurch entsteht an den Stellen, wo sich eine Butadienkette befindet, ein molekulares Loch, in dem anschließend das chemisch abgeschiedene Kupfer verankert werden kann.

Aus der DE—OS 23 46 818 sind schnellhärtende Lacke zum Beschichten von metallischen Materialien bekannt, bei denen das Bindemittelgemisch aus einem hochmolekularen, hydroxylgruppenhaltigen Polyester und einem Caprolactam-blokkierten Addukt des Isophorondiisocyanates mit freien Isocyanatgruppen besteht. Dieses Bindemittelgemisch kann noch Lackzusatzmittel, wie z.B. Verlauf- und Glanzverbesserer, Hitzestabilisatoren und Antioxydantien, und/oder auch Farbpigmente, wie z.B. Titandioxid als Weißpigment, enthalten. Derartige Lacke werden in der Coil-Coating-Lackierung für außenbewitterungsbeständige Ein- oder Zweischichtlackierungen verwendet. In modifizierten Einstellungen können diese Lacke auch auf dem Spritzlacksektor, insbesondere für Aluminium, nach den airless- bzw. elektrostatischen Verfahren eingesetzt werden. Für eine Siebdruckauftragung sind diese Lacke nicht geeignet.

Die FR—A—2 234 360 beschreibt Klebstoffzusammensetzungen, die bei der Herstellung von geschmeidigen gedruckten Schaltungen eingesetzt werden. Diese Zusammensetzungen bestehen aus einem Polyester, einem Isocyanat, einem Epoxy-Harz und einem Pigment, dessen Korngröße <10 μm ist.

Ähnliche Mischungen werden in GB—A—1 400 756 beschrieben, bestehend aus Hydroxypolyester, einem Isocyanat und möglicher Hinzufügung weiterer Polymere und von Füllstoffen.

Aufgabe der vorliegenden Erfindung ist es, einen Haftvermittler nach der eingangs genannten Art zu finden, der nicht nur bei Hartpapier als Trägermaterial, sondern auch bei einem hochtemperaturbeständigen thermoplastischen Kunststoff verwendet werden kann.

Diese Aufgabe wird durch eine Ausbildung entsprechend dem kennzeichnenden Teil des Anspruches 1 gelöst.

Der erfindungsgemäße Haftvermittler wird insbesondere bei der Anfertigung von in Additivtechnik hergestellen gedruckten Schaltungen eingesetzt. Als Trägermaterial können neben den üblicherweise in der Elektronik verwendeten Epoxy- oder Phenolharzschichtpreßstoffen auch hochtemperaturbeständige thermoplastische Kunststoffe herangezogen werden.

Diese Kunststoffe sind z.B. Polyphenylensulfid, Polyphenylenoxid, Polyimid, Polyphenylensulfoxid, Polyethersulfon oder Polyäthylensulfon. Diese im Spritzgußverfahren zu Substraten verarbeitbaren Kunststoffe beiten den Vorteil, auch ein dritte Dimension in der Form von z.B. Erhebungen anspritzen zu können, die als Montagehilfen für Bauelemente oder als sonstige Befestigungen dienen. Ein weiterer Vorteil bei der Verwendung von hochtemperaturbeständigen thermoplastischen Kunststoffen liegt darin, daß deren Wasseraufnahme, was z.B. bei der Metallisierung in chemischen Bädern wichtig ist, sehr gering ist. Insbesondere für diese letztgenannte Art des Trägermaterials ist, wie Versuche ergeben haben, der erfindungsgemäße Haftvermittler bestens geeignet.

Auf das Trägermaterial wird mittels Siebdruck-, Spritz-, Tauch-, Schleuder- oder Aufwalzverfahren der Haftvermittler aufgebracht und im Temperaturbereich von 180°—250° ausgehärtet. Dieser besteht aus einem organischen Bindemittel, das seinerseits aus einer Mischung eines gesättigten Polyesters und einem Isophorondiisocyanat besteht, wobei beide neben OH-Gruppen noch maskierte Isocyanat-Gruppen enthalten. Insgesamt beträgt der Anteil des Bindemittels an der Gesamtmischung 50 bis 80 Gew.-%. In dieses Bindemittel sind zu 10 bis 50 Gew.-% der Gesamtmischung noch Füllstoffteilchen mit einer Korngröße <15 µm eindispergiert. Als Füllstoffteilchen kommen Aluminiumoxid, Berylliumoxid, Talkum, Siliciumdioxid, Zinkoxid, kolloidale Kieselsäure, Bariumsulfat und/oder deren Mischungen in Betracht. Füllstoffteilchen dienen im allgemeinen der Streckung und damit der Herabsetzung der Herstellungskosten. Außerdem kann der Ausdehnungskoeffizient des Haftvermittlers besser an den des Trägermaterials angepaßt werden. Auch werden durch die Beimengung der Füllstoffteilchen die rheologischen Eigenschaften insbesondere im Hinblick auf die Verarbeitung im Siebdruck günstig beeinflußt. Darüberhinaus tragen die Füllstoffteilchen zur Verbesserung der thermischen Leitfähigkeit bei. Außerdem kann man noch dieser Bindemittelmischung mit 1 bis 5 Gew.-% — um eine gleichmäßige Dispersion zu erhalten — Antiabsetzmittel und Netzmittel mit Verlaufsmittel zugeben. Ferner enthält die Bindemittelmischung zu 5 bis 40 Gew.-% noch eine Beimengung von Epoxyharzester und/oder Acrylharz und/oder Melaminformaldehydharz und/oder Alkydharzkomponente, sowie Dispergiermittel auf der Basis eines Salzes aus langkettigen Polyaminamiden und einem hochmolekularem Ester beigesetzt wird. Die Auswahl dieser Beimengung hängt nicht zuletzt von dem verwendeten Trägermaterial ab.

Wie bereits erwähnt, wird der Haftvermittler auf das Trägermaterial aufgebracht und ausgehärtet. Hierbei entsteht eine Schicht, die entweder direkt nach einer chemischen Aufschließung als Haftvermittler für eine stromlose Metallisierung geeignet ist oder die als Grundierung für an sich bekannte Haftvermittler, wie z.B. Butadienacrylnitril in Kombination mit Phenol- bzw. Epoxidharz, für chemisch abzuscheidendes Kupfer dient. Diese letztgenannten bekannten Haftvermittler besitzen direkt auf hochtemperaturbeständigen, thermoplastischen Kunststoffe, wie z.B. Polyphenylensulfid, aufgebracht keine ausreichende Haftung.

Zur direkten Metallisierung im autokatalytisch arbeitenden Bädern ist es erforderlich, den Haftvermittler chemisch aufzuschließen. Dies geschieht unter Einwirkung von verdünnter Schwefel- oder Chromschwefelsäure, wobei sich in der Haftvermittlerschicht kavernenartige Poren ausbilden, aus denen nach einer Bekeimung mit katalytisch aktiven Substanzen, wie z.B. kolloidales Palladium, in dem chemisch arbeitenden stromlosen Metallisierungsbad eine Metallschicht herauswächst, die in den Poren der Haftvermittlerschicht verankert ist. Da diese Poren zum großen Teil direkte Verbindung zu dem im Bindemittel eindispergierten Füllstoffteilchen haben, die eine wesentlich bessere Wärmeleitfähigkeit als das organische Bindemittel besitzen, ist nicht nur eine gute Verankerung der aufgewachsenen Metallschicht, sondern auch eine wesentlich verbesserte Wärmeableitung von der Metallschicht bzw. Leiterbahn zu erwarten.

Nachfolgend wird die Erfindung anhand von Beispielen erläutert.

Beispiel 1

Auf ein entfettetes Phenolharzhartpapier wird z.B. mittels Siebdruck der Haftvermittler aufgebracht, bestehend aus

10 Gew.-% Epoxidharzester
62 Gew.-% Polyesterharz
 5 Gew.-% blockiertes Polyisocyanat
20 Gew.-% Talkum
 3 Gew.-% Dispergiermittel Anti-Terra-U

Nach der Auftragung erfolgt die Aushärtung des Haftvermittlers bei 200°C in 20 Minuten.

Beispiel 2

Auf ein entfettetes thermoplastisches Kunststoffsubstrat aus Polyphenylensulfid wird der Haftvermittler aufgebracht. Er besteht aus

10 Gew.-% Epoxidharzester
20 Gew.-% Polyesterharz
10 Gew.-% blockiertes Polyisocyanat
10 Gew.-% selbstvernetzendes Acrylatharz
30 Gew.-% Aluminiumoxid
17 Gew.-% Talkum
 3 Gew.-% Dispergiermittel Anti-Terra-U

Die Aushärtung erfolgt bei 200°C in 20 Minuten.

Bei den beiden Beispielen werden geeignete Verdünnungen zur Einstellung der passenden Verarbeitungsviskosität verwendet.

Nach der Aushärtung zeigen Abreißversuche, daß Abreißkräfte senkrecht zur Bahn von 3 bis 4 N/mm² erforderlich sind.

**Patentansprüch**

1. Haftvermittler für ein Trägermaterial bestehend aus einer organischen Bindemittelmischung, die sich zusammensetzt aus organischen Polymeren, Füllstoffteilchen, bedarfsweise Beimengungen von Antiabsetz- und/oder Verlaufmittel und aus einer Mischung von einem gesättigten Polyester und einem Isophorondiisocyanat mit 50 bis 80 Gew.-% von der Gesamtmischung, wobei die anteilige Mischung neben OH-Gruppen maskierte Isocyanat-Gruppen enthält, dadurch gekennzeichnet,

daß in die Bindemittelmischung Füllstoffteilchen bestehend aus Aluminiumoxid, Berrylliumoxid, Talkum, Siliciumdioxid, Zinkoxid, kolloidale Kieselsäure, Bariumsulfat und/oder deren Mischungen zu 10 bis 50 Gew.-% mit der Korngröße <15 μm eindispergiert sind,

daß die Bindemittelmischung zu 5 bis 40 Gew.-% noch eine Beimengung von Epoxyharzester und/oder Acrylharz und/oder Melaminformaldehydharz und/oder eine Alkydharzkomponente enthält,

daß das Trägermaterial, auf das die Bindemittelmischung als Haftvermittler aufgebracht ist, ein Epoxy- oder Phenolharzschichtpreßstoff oder ein hochtemperaturbeständiger, thermoplastischer Kunststoff, wie z.B. Polypenylensulfid, Polyphenylenoxid, Polyäthylensulfon oder Polyimid ist, und

daß Dispergiermittel auf der Basis eines Salzes aus langkettigen Polyaminamiden und einem hochmolekularem Ester beigesetzt wird.

**Revendication**

1. Agent d'adhérence pour un matériau de support, consistant en un mélange du liants organiques qui se compose de polymères organiques, de particules de charge, avec, s'il y a lieu, incorporation d'agents anti-dépôt et/ou de fluidité, et d'un mélange d'un polyester saturé et d'un diisocyanate d'isophorone représentant 50 à 80% du poids du mélange total, le mélange contenant, en plus de groupes OH, des groupes isocyanates masqués, agent caractérisé en ce que:

dans le mélange des liants, sont dispersées, de manière à constituer 10 à 50% en poids, des particules de charge consistant en de l'oxyde d'aluminium, de l'oxyde de béryllium, du talc, du bioxyde de silicium, de l'oxyde de zinc, de l'acide silicique colloîdal, du sulfate de baryum et/ou leurs mélanges, ayant une granulométrie inférieure à 15 μm,

le mélange des liants contient encore 5 à 40% en poids d'une matière incorporée consistant en de l'ester de résine époxyde et/ou de la résine acrylique et/ou de la résine mélamine-formaldéhyde et/ou une résine alkyde,

le matériau de support, sur lequel le mélange de liants est appliqué à titre d'agent d'adhérence, est un stratifié de résines époxydes ou phénoliques moulées ou une matière thermplastique stable aux températures élevées comme par exemple du poly(sulfure de phénylène), du poly(oxyde de phénylène), de la polyéthylènesulfone ou du polyimide, et

un agent de dispersion, à base d'un sel de polyamine amide à longue chaîne et d'un ester macromoléculaire est incorporé à l'agent d'adhérence.

**Claim**

1. Adhesive agent for a carrier material comprising an organic bonding agent mixture, which is composed of organic polymers, filler particles, if necessary additives selected from anti-settling agents and/or flow improvers, and of a mixture of a saturated polyester and an isophorone-di-isocyanate constituting 50 to 80% by weight of the total mixture, wherein the component mixture contains blocked isocyanate groups as well as OH-groups, characterised in that filler particles in an amount of 10 to 50% by weight with a grain size <15 μm, and comprising aluminium oxide, beryllium oxide, talcum, silicon dioxide, zinc oxide, colloidal silicic acid, barium sulphate and/or their mixtures are dispersed into the bonding agent mixture, in that the bonding agent mixture contains a further addition of epoxy resin ester and/or acrylic resin and/or melamine-formaldehyde resin and/or an alkyd resin component in an amount of 5 to 40% by weight, in that the carrier material, onto which the bonding agent mixture is applied as adhesive agent, is an epoxy- or phenolresin layer pressed material or a high temperature-resistant thermoplastics plastic, like e.g. polyphenylene sulphide, polyphenylene oxide, polyethylene sulphone or polyimide, and in that a dispersing agent based on a salt of long-chain polyamide amides and a high-molecular ester is added.